# EUROPÄISCHE PATENTSCHRIFT

(11) **EP 3 954 555 B1**
(45) Veröffentlichungstag und Bekanntmachung des Hinweises auf die Patenterteilung: **02.08.2023**
(21) Anmeldenummer: 21179227.0
(22) Anmeldetag: 14.06.2021
(51) Int. Cl.: B60D 5/00, B61D 17/22

(54) **FAHRZEUG MIT VERKLEIDUNG**
VEHICLE WITH TRIM
VÉHICULE POURVU DE CARÉNAGE

(30) Priorität: 10.08.2020 DE 102020210085
(43) Veröffentlichungstag der Anmeldung: 16.02.2022
(73) Patentinhaber: Siemens Mobility GmbH, 81739 München (DE)
(72) Erfinder: Dieckmann, Maik, 90459 Nürnberg (DE); Rieder, Georg, 90765 Fürth (DE)
(74) Vertreter: Siemens Patent Attorneys

(56) Entgegenhaltungen:
- EP-A1- 2 698 266
- AT-U1- 15 091
- DE-A1- 3 018 962
- DE-A1- 3 532 453
- DE-A1-102017 105 480
- DE-U1- 9 413 320

## Beschreibung

Die Erfindung betrifft ein Fahrzeug mit Verkleidung.

Mehrteilige Fahrzeuge, beispielsweise Gelenkbusse oder Schienenfahrzeuge, insbesondere im Personenverkehr, wie z.B. Straßenbahnen, Regionalzüge, etc., weisen üblicherweise wenigstens zwei oder auch mehrere Fahrzeugteile auf, die jeweils mittels eines Übergangsbereichs beweglich, insbesondere drehbar miteinander verbunden sind. Der Übergangsbereich weist hierzu in der Regel einen entsprechenden Gelenkfußboden sowie an den Seiten, insbesondere an den Seiten rechts und links, parallel zur Fahrtrichtung, eine Verkleidung in Form eines Balgs, insbesondere Falten- oder Wellenbalg, auf. Die Verkleidung, also beispielsweise der Balg, reicht in der Regel bis in Bodennähe herab, dennoch ist zwischen dem Ende eines Balgs, der sogenannten Bodenabdeckung des Balgs, und dem Gelenkfußboden aufgrund der notwendigen Relativbewegung beider Bauteile zueinander ein Spalt vorgesehen, damit das Balgmaterial aufgrund von Berührungen des Gelenkfußbodens nicht übermäßig verschleißt. Dieser Spalt ist ein Schallpfad für von außen eindringende Geräusche. Messungen haben ergeben, dass durch Verschließen dieses Spaltes der Geräuschpegel um 2 dB abgesenkt, bzw. die Schalldämmung entsprechend erhöht werden könnte.

Bislang bleibt der Spalt entweder offen oder es wird versucht, den Spalt mit weiteren Elementen, z.B. Bürsten, zu verschließen, welche aber anderweitig nachteilig sind. So leiern Bürsten aus, bieten keinen deutlich besseren Schallschutz und sehen zudem optisch unvorteilhaft aus.

Die Verkleidung, beispielsweise ein Balg, kann teilweise auch selbst bis zum Boden reichen, wobei dies jedoch in der Regel durch einen unbeabsichtigten Durchhang des Balgstoffs geschieht. Der Balgstoff reicht dadurch einerseits nicht gleichmäßig bis zum Boden bzw. liegt andererseits, insbesondere bei Vertikalbewegungen des Balgs und des Gelenkfußbodens zueinander, beispielsweise beim Durchfahren von Kuppen, dann sehr stark auf, sodass auf der einen Seite keine deutliche und insbesondere keine permanente Schallschutzverbesserung erreichbar ist und/oder auf der anderen Seite diese Situation von den Fahrgästen als optisch äußerst unvorteilhaft wahrgenommen und somit ein sehr schlechter Eindruck vermittelt wird. DE 35 32 453 A1 offenbart ein Fahrzeug gemäß dem Oberbegriff des Anspruchs 1.

Der Erfindung liegt die Aufgabe zugrunde, ein Fahrzeug mit einer Verkleidung anzugeben, mit der der Lärm- bzw. Schallpegel im Fahrzeug dauerhaft gesenkt werden kann.

Gelöst wird die Aufgabe durch die Merkmale des unabhängigen Patentanspruchs 1. Weiterbildungen und Ausgestaltungen der Erfindung finden sich in den Merkmalen der abhängigen Patentansprüche wieder.

Dabei weist das Fahrzeug eine Verkleidung auf, bei der zwischen Verkleidung und Boden des Übergangsbereichs des Fahrzeugs kein Spalt besteht.

Die erfindungsgemäße Lösung hat den Vorteil, dass dadurch im Übergangsbereich des Fahrzeugs der Schallpfad von außen geschlossen wird und dadurch dauerhaft der Schall- bzw. Lärmpegel im Innenraum gesenkt und somit die Schalldämmung des Fahrzeugs verbessert wird.

Dabei besteht die Verkleidung wenigstens aus einem ersten und einem zweiten Teil. Dabei ist der zweite Teil der Verkleidung an der, vom Innenraum des Übergangsbereichs nicht sichtbaren Seite des ersten Teils der Verkleidung angebracht. Somit ist der zweite Teil der Verkleidung besonders vorteilhaft, vom Innenraum des Übergangsbereichs gesehen, im Wesentlichen unsichtbar. Somit kann, unsichtbar für den Fahrgast, hinter dem, vom Innenraum des Fahrzeugs sichtbaren ersten Teil der Verkleidung, d.h. dem Balg, ein wunschgemäß gefertigter, zweiter Teil der Verkleidung an beliebiger Stelle, insbesondere an jeder benötigten Stelle, beispielsweise mittels Verkleben, Verschweißen, etc. oder durch jede andere denkbare und mögliche Art der Verbindung, angebracht werden.

Nach einer weiteren bevorzugten Ausführungsform der Erfindung ist der zweite Teil der Verkleidung in Bodennähe am ersten Teil der Verkleidung, beispielsweise einem Balg, angebracht. Auf diese Weise kann einerseits der zweite Teil der Verkleidung möglichst klein gefertigt werden und darüber hinaus kann dadurch die Verbindungsstelle des zweiten Teils am ersten Teil der Verkleidung so nahe wie möglich, bzw. nötig an die Abdeckungs- bzw. zu schließende Stelle heranrücken, was wiederum vorteilhafterweise zu weniger Verwerfungen bei entsprechenden Drehbewegungen des Übergangsbereichs und somit zu geringerem Verschleiß des zweiten Teils der Verkleidung führt.

Nach einer weiteren besonders bevorzugten Ausführungsform der Erfindung wird mittels des zweiten Teils der Verkleidung ein Spalt geschlossen, der zwischen dem ersten Teil der Verkleidung und dem Boden des Übergangsbereichs besteht. Mit etwas Versatz nach außen wird hinter dem ersten Teil der Verkleidung der zweite Teil der Verkleidung so angebracht, dass dieser bis zum Boden reicht. Somit wird einerseits erfindungsgemäß erreicht, dass der zweite Teil der Verkleidung im Nicht-Sichtbereich den Spalt zwischen dem ersten Teil der Verkleidung und dem Boden des Übergangsbereichs schließt und damit die Schalldämmung erhöht, ohne die Optik zu beeinträchtigen, und zusätzlich der sichtbare erste Teil der Verkleidung, beispielsweise einem Balg, insbesondere Falten- oder Wellenbalg, sehr lange ein optisch wertiges Aussehen beibehält.

Nach einer weiteren bevorzugten Ausführungsform der Erfindung besteht der wenigstens erste Teil der Verkleidung aus einem Material, welches schalldämmende und/oder feuerhemmende Eigenschaften aufweist. Somit kann der zweite Teil der Verkleidung aus einem anderen, zum ersten Teil unterschiedlichen Material bestehen, wodurch, je nach Bedarf, ein ggf. geeigneteres Material für den zweiten Teil verwendbar ist und gleichzeitig die Einhaltung der Anforderungen bzgl. Brandschutz und Schalldämmung mittels des ersten Teils der Verkleidung, beispielsweise eines Balgs, gewährleistet werden kann. Als Material insbesondere für den ersten Teil der Verkleidung können selbstverständlich alle üblicherweise verwendbaren und verwendeten Balgstoffe dienen, da diese insbesondere bezüglich Haltbarkeit, Schalldämmung und Brandschutz sehr gut geeignet sind. Als Material für die zusätzliche Lage des zweiten Teils der Verkleidung können aber auch andere Werkstoffe als die typischen Balgstoffe verwendet, bzw. eingesetzt werden.

Besonders vorteilhaft bestehen beide Teile der Verkleidung aus demselben Material, was sowohl vorteilhaft bei der Herstellung hinsichtlich Kosten, als auch insbesondere vorteilhaft für eine besonders einfache Befestigung des zweiten Teils am ersten Teil der Verkleidung, beispielsweise einem Balg, ist.

Im Weiteren werden bevorzugte Ausführungsbeispiele der Erfindung mit Bezugnahme auf die Zeichnung näher erläutert. Es zeigt:

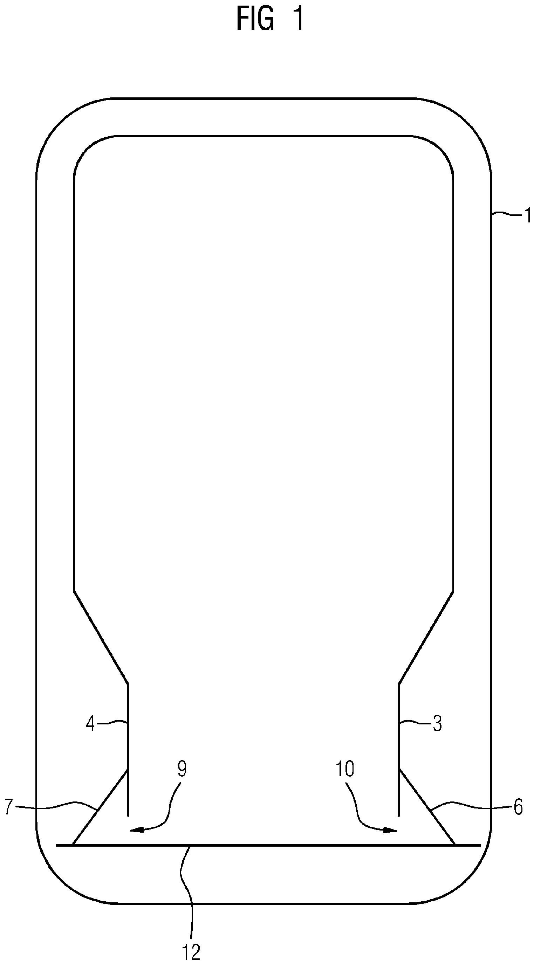

- Fig. 1: einen Querschnitt eines Übergangsbereichs eines Fahrzeugs mit einer erfindungsgemäßen Verkleidung

Fig. 1 zeigt einen Querschnitt eines Übergangsbereichs eines Fahrzeugs 1, erfindungsgemäß eines Schienenfahrzeugs, mit einer erfindungsgemäßen Verkleidung 3, 4, 6, 7, wobei der erste Teil der Verkleidung 3, 4 entsprechend Fig. 1 zusammenhängen und sich über die Innenseite erstrecken kann. Hier sind aber auch getrennte erste Teile der Verkleidung 3, 4 denkbar und möglich. Dabei weist die erfindungsgemäße, zweiteilige Verkleidung, als Balg, insbesondere Falten- oder Wellenbalg ausgeführt, auf der linken und rechten Seite des Übergangsbereichs des Fahrzeugs 1 jeweils einen ersten Teil der Verkleidung 3, 4 auf, zwischen dessen bodenseitigen Enden und dem Boden 12 des Übergangsbereichs jeweils ein Spalt 9, 10 dargestellt ist. Der Balg, insbesondere Falten- oder Wellenbalg, hat üblicherweise eine entsprechende, zugehörige Außenhaut, aus Gründen der Übersichtlichkeit hier nicht dargestellt, die zwischen der Verkleidung 3, 4, 6, 7 und der Fahrzeughülle 1 verläuft und die die in Fig. 1 gezeigte Verkleidung 3, 4, 6, 7 sowie den Boden 12 umgibt. Der Boden 12 ist hierbei insbesondere ein drehbarer Gelenkboden. Des Weiteren ist in der Fig. 1 auf der linken und rechten Seite jeweils ein zweiter Teil der Verkleidung 6, 7 gezeigt, der in Bodennähe an der, vom Innenraum des Übergangsbereichs nicht sichtbaren Seite des ersten Teils der Verkleidung 3, 4, im Wesentlichen unsichtbar für den Fahrgast, angebracht ist und den jeweiligen Spalt 9, 10 zwischen dem ersten Teil der Verkleidung 3, 4 und dem Boden 12 des Übergangsbereichs schließt, indem der zweite Teil der Verkleidung 6, 7 bis zum Boden 12 reicht und somit für eine dauerhafte Verbesserung, insbesondere Erhöhung der Schalldämmung sorgt, ohne die Optik zu beeinträchtigen.

Die beiden Teile der Verkleidung 3, 4, 6, 7 bestehen vorteilhafterweise hinsichtlich Herstellung und Befestigung aus dem gleichen Material, wobei das Material zur Einhaltung der Anforderungen bzgl. Brandschutz und Schalldämmung schalldämmende und/oder feuerhemmende Eigenschaften aufweist. Als Material können demzufolge alle üblicherweise in diesem Anwendungsbereich verwendbaren und verwendeten Balgstoffe dienen, da diese insbesondere bezüglich Haltbarkeit, Schalldämmung und Brandschutz sehr gut geeignet sind. Darüber hinaus ist es alternativ aber auch denkbar und möglich, dass beide Teile der Verkleidung 3, 4, 6, 7, beispielsweise des Balgs, aus unterschiedlichen Materialien bestehen, sodass für die zusätzliche Lage des zweiten Teils der Verkleidung 6, 7, je nach Bedarf, ein anderes, ggf. geeigneteres Material verwendet, bzw. eingesetzt und gleichzeitig die Einhaltung der Anforderungen bzgl. Brandschutz und Schalldämmung mittels des ersten Teils der Verkleidung, d. h. des Balgs, durch Verwendung eines typischen Balgstoffes gewährleistet werden kann.

## Patentansprüche

1. Schienenfahrzeug (1) mit wenigstens zwei Fahrzeugteilen, wobei die wenigstens zwei Fahrzeugteile mittels eines Übergangsbereichs beweglich miteinander verbunden sind, und der Übergangsbereich an den Seiten eine Verkleidung (3, 4, 6, 7) aufweist,
wobei, die Verkleidung (3, 4, 6, 7) derart aufgebaut ist, dass zwischen Verkleidung (3, 4, 6, 7) und Boden (12) des Übergangsbereichs kein Spalt besteht, wobei die Verkleidung (3, 4, 6, 7) wenigstens aus einem ersten (3, 4) und einem zweiten Teil (6, 7) besteht, **dadurch gekennzeichnet, dass**
der erste Teil ein Balg (3, 4) ist, wobei der Balg (3,4) eine zugehörige Außenhaut aufweist, und der zweite Teil der Verkleidung (6, 7) an der, vom Innenraum des Übergangsbereichs nicht sichtbaren Seite des Balgs (3, 4), zwischen der, vom Innenraum des Übergangsbereichs nicht sichtbaren Seite des Balgs (3, 4) und der zugehörigen Außenhaut des Balgs (3, 4) angebracht ist.

2. Schienenfahrzeug (1) nach Anspruch 1,
**dadurch gekennzeichnet, dass**
der zweite Teil der Verkleidung (6, 7) in Bodennähe am ersten Teil der Verkleidung (3, 4) angebracht ist.

3. Schienenfahrzeug (1) nach Anspruch 1 oder 2,
**dadurch gekennzeichnet, dass**
der zweite Teil der Verkleidung (6, 7) vom Innenraum des Übergangsbereichs gesehen im Wesentlichen unsichtbar ist.

4. Schienenfahrzeug (1) nach einem der vorherigen Ansprüche,
**dadurch gekennzeichnet, dass**
dass zwischen dem ersten Teil der Verkleidung (3, 4) und dem Boden (12) des Übergangsbereichs ein Spalt (9, 10) besteht, der mittels des zweiten Teils der Verkleidung (6, 7) geschlossen wird.

5. Schienenfahrzeug (1) nach einem der vorherigen Ansprüche,
**dadurch gekennzeichnet, dass**
wenigstens der erste Teil der Verkleidung (3, 4) aus einem Material besteht, welches schalldämmende und/oder feuerhemmende Eigenschaften aufweist.

6. Schienenfahrzeug (1) nach einem der vorherigen Ansprüche,
**dadurch gekennzeichnet, dass**
beide Teile der Verkleidung (3, 4, 6, 7) aus demselben Material bestehen.

## Claims

1. Rail vehicle (1) with at least two vehicle parts, wherein the at least two vehicle parts are moveably connected to one another by means of a gangway, and the gangway has panelling (3, 4, 6, 7) on the sides,
wherein,
the panelling (3, 4, 6, 7) is designed such that there is no gap between the panelling (3, 4, 6, 7) and the gangway floor (12) of the gangway, wherein the panelling (3, 4, 6, 7) consists at least of a first (3, 4) and a second part (6, 7),
**characterised in that**
the first part is a bellows (3, 4), wherein the bellows (3, 4) has a corresponding body shell, and the second part of the panelling (6, 7) is attached to the side of the bellows (3, 7) not visible from the interior space of the gangway between the side of the bellows (3, 4) not visible from the interior space of the gangway and the corresponding body shell of the bellows (3, 4).

2. Rail vehicle (1) according to claim 1,
**characterised in that**
the second part of the panelling (6, 7) is attached to the first part of the panelling (3, 4) close to the floor.

3. Rail vehicle (1) according to claim 1 or 2,
**characterised in that**
the second part of the panelling (6, 7) essentially cannot be seen when viewed from the interior space of the gangway.

4. Rail vehicle (1) according to one of the preceding claims,
**characterised in that**
there is a gap (9, 10) between the first part of the panelling (3, 4) and the floor (12) of the gangway, which is closed by means of the second part of the panelling (6, 7).

5. Rail vehicle (1) according to one of the preceding claims,
**characterised in that**
at least the first part of the panelling (3, 4) comprises a material which has sound-damping and/or fire-retardant properties.

6. Rail vehicle (1) according to one of the preceding claims,
**characterised in that**
both parts of the panelling (3, 4, 6, 7) comprise the same material.

## Revendications

1. Véhicule (1) ferroviaire comprenant au moins deux parties de véhicule, dans lequel les au moins deux parties du véhicule sont reliées entre elles de manière mobile au moyen d'une partie d'intercirculation, et la partie d'intercirculation a, sur les côtés, un panneautage (3, 4, 6, 7),
dans lequel
le panneautage (3, 4, 6, 7) est construit de manière à ne pas avoir d'intervalle entre le panneautage (3, 4, 6, 7) et le plancher (12) de la partie d'intercirculation, dans lequel le panneautage (3, 4, 6, 7) est constitué d'au moins d'une première (3, 4) et d'une deuxième parties (6, 7), **caractérisé en ce que**
la première partie est un soufflet (3, 4), dans lequel le soufflet (3, 4) a une peau extérieure, qui lui appartient, et la deuxième partie du panneautage (6, 7) est, du côté du soufflet (3, 4), qui n'est pas visible de l'espace intérieur de la partie d'intercirculation, monté entre le côté du soufflet (3, 4), qui n'est pas visible de l'espace intérieur de la partie d'intercirculation, et la peau extérieure, qui lui appartient, du soufflet (3, 4) .

2. Véhicule (1) ferroviaire suivant la revendication 1,
**caractérisé en ce que**
la deuxième partie du panneautage (6, 7) est montée sur la première partie du panneautage (3, 4) à proximité du plancher.

3. Véhicule (1) ferroviaire suivant la revendication 1 ou 2,
**caractérisé en ce que**
la deuxième partie du panneautage (6, 7) est, considérée de l'espace intérieur de la partie d'intercirculation, sensiblement invisible.

4. Véhicule (1) ferroviaire suivant l'une des revendications précédentes,
**caractérisé en ce qu'**
il y a, entre la première partie du panneautage (3, 4) et le plancher (12) de la partie d'intercirculation, un intervalle (9, 10), qui est fermé au moyen de la deuxième partie du panneautage (6, 7).

5. Véhicule (1) ferroviaire suivant l'une des revendications précédentes,
**caractérisé en ce que**
la première partie du panneautage (3, 4) est en un matériau, qui a des propriétés insonorisantes et/ou ignifuges.

6. Véhicule (1) ferroviaire suivant l'une des revendications précédentes,
**caractérisé en ce que**
les deux parties du panneautage (3, 4, 6, 7) sont en le même matériau.
